# FASCICULE DE BREVET EUROPEEN

(11) **EP 2 076 475 B1**
(45) Date de publication et mention de la délivrance du brevet: **28.07.2010**
(21) Numéro de dépôt: 07858557.7
(22) Date de dépôt: 11.10.2007
(51) Int. Cl.: C04B 35/48

(54) **PARTICULE EN MATIERE CERAMIQUE FONDUE**
PARTIKEL EINES GESCHMOLZENEN KERAMIKMATERIALS
PARTICLE OF A MOLTEN CERAMIC MATERIAL

(30) Priorité: 13.10.2006 FR 0654276
(43) Date de publication de la demande: 08.07.2009
(73) Titulaire: Saint-Gobain Centre de Recherches et d'Etudes Européen, 92400 Courbevoie (FR)
(72) Inventeur: BOUSSANT-ROUX, Yves, Lexington, Massachusetts 02420 (US); NONNET, Emmanuel, 84260 Sarrians (FR)
(74) Mandataire: Tanty, François
(86) Numéro de dépôt international: PCT/FR2007/052127
(87) Numéro de publication internationale: WO 2008/043966

(56) Documents cités:
- EP-A- 0 662 461
- WO-A-01/23324
- FR-A- 2 320 276

## Description

La présente invention se rapporte à de nouvelles particules, notamment sous forme de billes, en céramique fondues, à un procédé de fabrication de ces billes, et à l'utilisation de ces particules en tant qu'agents de broyage, agents de dispersion en milieu humide ou pour le traitement de surfaces.

L'industrie minérale met en oeuvre des billes pour le broyage fin de matières prébroyées à sec par des procédés traditionnels, notamment pour le carbonate de calcium, l'oxyde de titane, le gypse, le kaolin et le minerai de fer.

Les industries des peintures, encres, colorants, laques magnétiques, composés agrochimiques utilisent de telles billes pour la dispersion et l'homogénéisation des divers constituants liquides et solides.

L'industrie du traitement de surfaces a enfin recours à ces particules ou billes notamment pour des opérations de nettoyage de moules métalliques (pour la fabrication de bouteilles par exemple), l'ébavurage de pièces, le décalaminage, la préparation d'un support en vue d'un revêtement, le traitement de pré-contraintes (« shot peening »), le conformage de pièces (« peen forming ») ...

Les particules sont classiquement sensiblement sphériques et d'une taille de 0,1 à 4 mm afin de servir l'ensemble des marchés décrits ci-dessus. Pour qu'elles puissent être utilisées dans ces trois types d'applications, elles doivent notamment présenter les propriétés suivantes :
- une inertie chimique et colorante vis-à-vis des produits traités,
- une résistance mécanique aux chocs,
- une résistance à l'usure,
- une faible abrasivité pour le matériel, notamment les organes agitateurs et les cuves, ou les organes de projection, et
- une faible porosité ouverte pour un nettoyage aisé.

On trouve sur le marché, différents types de particules, particulièrement des billes, notamment dans le domaine du microbroyage :
■ Le sable à grains arrondis, comme le sable d'OTTAWA par exemple, est un produit naturel et bon marché, mais inadapté aux broyeurs modernes, pressurisés et à fort débit. En effet, le sable est peu résistant, de faible densité, variable en qualité et abrasif pour le matériel.
■ Les billes de verre, largement utilisées, présentent une meilleure résistance, une plus faible abrasivité et une disponibilité dans une gamme plus large de diamètres.
■ Les billes métalliques, notamment en acier, présentent une inertie insuffisante vis-à-vis des produits traités, entraînant notamment une pollution des charges minérales et un grisaillement des peintures, et une densité trop élevée nécessitant des broyeurs spéciaux impliquant notamment une forte consommation d'énergie, un échauffement important et une sollicitation mécanique élevée du matériel.

On connaît également des billes en matière céramique. Ces billes ont une meilleure résistance que les billes de verre, une densité plus élevée et une excellente inertie chimique. On peut distinguer :
■ les billes céramiques frittées, obtenues par un façonnage à froid d'une poudre céramique et puis consolidation par cuisson à haute température, et
■ les billes céramiques dites « fondues », généralement obtenues par fusion de composants céramiques, formation de gouttes sphériques à partir de la matière fondue, puis solidification desdites gouttes.

La grande majorité des billes fondues ont une composition du type zircone-silice (ZrO₂ - SiO₂) où la zircone est cristallisée sous forme monoclinique et/ou partiellement stabilisée (par des ajouts adaptés), et la silice ainsi qu'une partie des additifs éventuels forment une phase vitreuse liant les cristaux de zircone. Les billes céramiques fondues offrent des propriétés optimales pour le broyage, à savoir une bonne résistance mécanique, une densité élevée, une inertie chimique et une abrasivité faibles vis-à-vis du matériel de broyage.

Des billes céramiques fondues à base de zircone et leur utilisation pour le broyage et la dispersion sont par exemple décrites dans FR 2 320 276 et EP 0 662 461. Ces documents décrivent l'influence de SiO₂, Al₂O₃, MgO, CaO, Y₂O₃, CeO₂, et Na₂O sur les principales propriétés, notamment sur les propriétés de résistance à l'écrasement et de résistance à l'abrasion.

Bien que les billes en céramique fondues de l'art antérieur soient de bonne qualité, l'industrie a toujours besoin de produits de qualité encore meilleure. En effet, les conditions de broyage sont toujours plus exigeantes et il est nécessaire, afin de diminuer les coûts d'exploitation, d'augmenter les rendements des appareils utilisés. En particulier, il est souhaitable de diminuer les durées d'indisponibilité de ces appareils.

L'invention vise à satisfaire ces besoins en fournissant des particules en céramique fondues qui, outre les qualités requises citées ci-dessus, présentent une résistance à la casse améliorée.

Plus précisément l'invention concerne une nouvelle particule céramique fondue, de préférence sous forme d'une bille, présentant la composition chimique suivante, en pourcentages en masse sur la base des oxydes et pour un total de 100 % :
55 % < ZrO₂+HfO₂ < 70 % ;
20%<SiO₂<30%;
6,5 % < MgO < 9,5 % ;
Al₂O₃ en une quantité telle que le rapport en masse MgO / Al₂O₃ soit compris entre 2,4 à 6,6, et
moins de 0,6 % d'autres oxydes.

Les inventeurs ont trouvé, de façon inattendue, que la présence de magnésie (MgO) et d'alumine (Al₂O₃) dans des proportions telles que le rapport en masse MgO / Al₂O₃ soit compris entre 2,4 à 6,6 améliore notablement les propriétés des particules en céramique fondues, notamment par comparaison aux particules contenant ces deux oxydes dans un rapport différent telles que celles décrites dans FR 2 320 276. En particulier, on obtient des particules plus résistantes à la casse en utilisation.

Les particules selon l'invention sont ainsi particulièrement bien adaptées à des applications de dispersion en milieu humide, de microbroyage et de traitement de surfaces. Dans l'application au broyage, les particules selon l'invention présentent une résistance à la casse améliorée au démarrage et en utilisation.

Sauf mention contraire, tous les pourcentages sont des pourcentages massiques exprimés en pourcentage par rapport à la masse totale des oxydes.

De préférence, la particule selon l'invention présente encore une, et de préférence plusieurs, des caractéristiques optionnelles suivantes :
■ La teneur en oxydes d'une particule selon l'invention représente plus de 99,5%, de préférence plus de 99,9%, et, de préférence encore, sensiblement 100% de la masse totale de ladite particule.
■ La particule en céramique fondue selon l'invention comprend une quantité massique de ZrO₂ supérieure ou égale à 58,9%, de préférence supérieure ou égale à 60%, de préférence supérieure ou égale à 60,7 %, et/ou inférieure ou égale à 69,5%, de préférence inférieure ou égale à 68%, de préférence inférieure ou égale à 65%, de préférence encore inférieure ou égale à 62%, de préférence inférieure ou égale à 61,2%. De préférence encore, cette quantité est sensiblement égale à 60,8%.
■ La particule en céramique fondue selon l'invention comprend une quantité massique de SiO₂ supérieure ou égale à 22%, de préférence supérieure ou égale à 25%, de préférence encore à 27%, de préférence à 28 %, et/ou inférieure ou égale à 29%, de préférence à 28,5%. De préférence encore, cette quantité est sensiblement égale à 28,3%.
■ La particule en céramique fondue selon l'invention comprend une quantité massique de MgO supérieure ou égale à 8%, de préférence à 8,3%, et/ou inférieure ou égale à 9%, de préférence à 8,8%. Dé préférence encore, cette quantité est sensiblement égale à 8,6%.
■ La particule en céramique fondue selon l'invention comprend une quantité massique de Al₂O₃ supérieure ou égale à 1,2%, de préférence à 1,4 %, et/ou inférieure ou égale à 3,2%, de préférence à 2,5%, de préférence à 2%. De préférence encore, cette quantité est sensiblement égale à 1,9%.
■ La particule en céramique fondue selon l'invention présente un rapport en masse MgO/Al₂O₃ supérieur à 3, de préférence supérieur à 3,7, de préférence supérieur à 4,2, et/ou inférieur ou égal à 6, de préférence inférieur ou égal à 5,5, de préférence inférieur à 5. De préférence le rapport en masse MgO / Al₂O₃ est sensiblement de 4,6.
■ Les « autres oxydes » ne sont présents que sous forme d'impuretés. On considère qu'une teneur totale en « autres oxydes » inférieure à 0,6% ne modifie pas substantiellement les résultats obtenus. Cependant, de préférence, ils représentent moins de 0,5%, de préférence moins de 0,45%, de la masse totale en oxydes de la particule en céramique fondue selon l'invention.
■ La particule en céramique fondue selon l'invention présente une taille inférieure à 4 mm et/ou supérieure à 0,1 mm.
■ Une particule selon l'invention préférée présente la composition chimique suivante, en pourcentages en masse sur la base des oxydes et pour un total de 100%
   60 % < ZrO₂+HfO₂ < 62 %;
   27 % < SiO₂ < 29 % ;
   8 % < MgO < 9 % ; et
   Al₂O₃ en une quantité telle que le rapport en masse MgO / Al₂O₃; est compris entre 4,2 et 5 ; et moins de 0,5 % d'autres oxydes.
■ La particule selon l'invention se présente de préférence sous la forme d'une bille.

L'invention concerne également un ensemble de particules comprenant plus de 90%, de préférence plus de 95%, de préférence environ 100%, en pourcentages en poids, de particules selon l'invention.

Par « bille », on entend une particule présentant une sphéricité, c'est-à-dire un rapport entre son plus petit et son plus grand diamètre, supérieure ou égale à 0,6, quelle que soit la façon par laquelle cette sphéricité a été obtenue. De préférence les billes selon l'invention présentent une sphéricité supérieure ou égale à 0,7.

Par « bille fondue », ou plus largement « particule fondue », on entend une bille (ou particule) solide obtenue par solidification d'une composition à l'état liquide.

On appelle « taille » d'une bille (ou particule) la moyenne de sa plus grande dimension dM et de sa plus petite dimension dm : (dM+dm)/2.

Par « impuretés », on entend les constituants inévitables, introduits nécessairement avec les matières premières. En particulier les composés faisant partie du groupe des oxydes, nitrures, oxynitrures, carbures, oxycarbures, carbonitrures et espèces métalliques de sodium et autres alcalins, fer, silicium, vanadium et chrome sont des impuretés. A titre d'exemples, on peut citer CaO, Fe₂O₃ ou Na₂O. Le carbone résiduel fait partie des impuretés de la composition des particules selon l'invention. En revanche, l'oxyde d'hafnium n'est pas considéré comme une impureté. De préférence Y₂O₃ et CeO₂ sont des impuretés. En particulier, de préférence Y₂O₃ < 0,2 % et CeO₂ < 0,6 %. La teneur en Y₂O₃ peut même être inférieure à 0,1 %, voire inférieure à 0,05 %, et la teneur en CeO₂ peut même être inférieure à 0,5 %, en pourcentages massiques sur la base des oxydes.

Lorsqu'il est fait référence à ZrO₂, il y a lieu de comprendre (ZrO₂+HfO₂). En effet, un peu de HfO₂, chimiquement indissociable du ZrO₂ et présentant des propriétés semblables, est toujours naturellement présent dans les sources de zircone à des teneurs inférieures à 2%.

L'invention concerne également un procédé de fabrication de particules fondues selon l'invention, notamment de billes fondues, comprenant les étapes successives suivantes :
a) mélange de matières premières pour former une charge de départ ;
b) fusion de la charge de départ jusqu'à obtention d'un liquide en fusion,
c) dispersion du liquide en fusion sous forme de gouttelettes liquides et solidification de ces gouttelettes liquides sous forme de particules (notamment de billes) solides.

Selon l'invention, les matières premières sont choisies à l'étape a) de manière que les particules obtenues à l'étape c) soient conformes à l'invention.

A l'étape a), la charge de départ est formée des oxydes indiqués ou de précurseurs de ceux-ci. De préférence, on utilise du sable de zircon naturel ZrSiO₄ titrant environ 66 % de ZrO₂ et 33 % de SiO₂, plus des impuretés. L'apport de ZrO₂ par l'intermédiaire du zircon est en effet beaucoup plus économique qu'une addition de ZrO₂.

L'ajustement des compositions peut se faire par addition d'oxydes purs ou de mélanges d'oxydes, notamment ZrO₂, SiO₂, MgO et Al₂O₃.

Selon l'invention, l'homme du métier ajuste la composition de la charge de départ de manière à obtenir, à l'issue de l'étape c), des particules conformes à l'invention. L'analyse chimique des particules en céramique fondues selon l'invention est généralement sensiblement identique à celle de la charge de départ. En outre, le cas échéant, par exemple pour tenir compte de la présence d'oxydes volatils, ou pour tenir compte de la perte en SiO₂ lorsque la fusion est opérée dans des conditions réductrices, l'homme du métier sait comment adapter la composition de la charge de départ en conséquence.

De préférence aucun oxyde autre que ZrO₂+HfO₂, SiO₂, MgO et Al₂O₃ n'est introduit volontairement dans la charge de départ, les autres oxydes présents étant des impuretés.

De préférence, Y₂O₃ et CeO₂ sont des impuretés.

A l'étape b), la charge de départ est fondue, de préférence dans un four à arc électrique. L'électrofusion permet en effet la fabrication de grandes quantités de particules (de préférence sous la forme de billes) avec des rendements intéressants. Mais tous les fours connus sont envisageables, comme un four à induction ou un four à plasma, pourvu qu'ils permettent de faire fondre complètement la charge de départ.

A l'étape c), un filet du liquide en fusion est dispersé en petites gouttelettes liquides qui, par suite de la tension superficielle, prennent, pour la majorité d'entre elles, une forme sensiblement sphérique. Cette dispersion peut être opérée par soufflage, notamment avec de l'air et/ou de la vapeur d'eau, ou par tout autre procédé d'atomisation d'une matière fondue, connu de l'homme de l'art. Une particule en céramique fondue d'une taille de 0,1 à 4 mm peut être ainsi produite.

Le refroidissement résultant de la dispersion conduit à la solidification des gouttelettes liquides. On obtient alors des particules, notamment des billes, solides selon l'invention.

Tout procédé conventionnel de fabrication de particules fondues, notamment de billes fondues, peut être mis en oeuvre, pourvu que la composition de la charge de départ permette d'obtenir des particules présentant une composition conforme à celle des particules selon l'invention.

D'autres formes que celles des « billes » sont possibles selon l'invention, mais la forme sensiblement sphérique est préférée. Dans la suite de la description, il est donc fait référence à des billes, sans que cette référence ne soit limitative.

Les billes fondues selon l'invention sont très résistantes à la casse et à l'usure.

Sans être liés par une théorie, les inventeurs expliquent que cette résistance est obtenue par l'amélioration de la cohésion des cristaux de zircone avec la phase vitreuse (verre de silice) grâce aux ajouts MgO et Al₂O₃, introduits dans les proportions considérées.

Les billes en céramique fondues selon l'invention sont particulièrement bien adaptées comme agents de broyage et de dispersion en milieu humide, ainsi que pour le traitement de surfaces. L'invention concerne donc également l'utilisation d'une pluralité de particules, notamment de billes selon l'invention, ou de billes fabriquées suivant un procédé selon l'invention, en tant qu'agents de broyage, agents de dispersion en milieu humide, ou pour le traitement de surfaces.

On peut noter cependant que les propriétés des billes, notamment leur résistance, leur densité, ainsi que leur facilité d'obtention, peuvent les rendre aptes à d'autres applications, notamment comme agents de broyage à sec, de soutènement et d'échange thermique.

Les exemples non limitatifs suivants sont donnés dans le but d'illustrer l'invention.

Les méthodes suivantes ont été utilisées pour déterminer certaines propriétés de différents mélanges de billes en céramique fondues. Elles permettent une excellente simulation du comportement réel en service dans l'application de broyage.

Pour tester la résistance à l'usure des billes, un broyeur pressurisé horizontal de capacité 1,2 litre est rempli par 1 litre (volume apparent) de billes à tester, soit un taux de remplissage de 83,3%. Les organes agitateurs sont constitués de disques métalliques, excentrés par rapport à l'axe de rotation et tournant à 2750 tour/min, soit une vitesse périphérique des disques de 10 m/s.

La suspension à broyer est une suspension de poudre de zircone concentrée à 60% dans l'eau, soit 6 kg de poudre pour 4 kg d'eau. Cette suspension est véhiculée à travers le broyeur par une pompe péristaltique au débit de 6 1/h. La durée de l'essai est de 1,5 heure. Une fois l'essai terminé, les billes sont extraites du broyeur, lavées et séchées.

Après chaque essai, la perte de masse des billes est déterminée par pesage. L'usure des billes est exprimée en pourcentage par heure d'essai (%/h) et est égale à la perte de masse des billes ramenée à la masse initiale des billes, le tout divisé par la durée de l'essai.

Pour tester la résistance à la casse des billes, il convient de se placer dans des conditions extrêmes pouvant conduire à des phénomènes de casse dans un broyeur en fonctionnement normal.

Un broyeur pressurisé de type horizontal est muni de doigts sur le rotor et de contre-doigts sur l'intérieur de la cuve. Ce broyeur, d'un volume de 1,2 litre, est chargé à 50 % volumique en billes de la granulométrie étudiée (volume apparent), ce qui correspond à une masse initiale de billes mᵢ.

Avant la mise en rotation du broyeur et pour toute la durée de l'essai, l'enceinte est alimentée en eau avec un débit de 6 l/h. La vitesse de rotation est fixée à 7,3 m/s pendant 30 minutes.

Une fois l'essai terminé, les billes sont extraites de la cuve, séchées puis tamisées. L'ensemble des billes est trié manuellement pour extraire les billes cassées, qui sont ensuite pesées. La masse de billes cassées est égale à m_{bc} . Le pourcentage de billes cassées est égale à 100*m_{bc} / mᵢ.

Dans les exemples, on utilise pour la charge de départ une composition à base de zircon, et on ajoute de l'oxyde de magnésium et de l'oxyde d'aluminium. Plus précisément, on introduit dans un four électrique à arc de type Héroult une composition pulvérulente constituée de sable de zircon. On effectue plusieurs cycles fusion/coulée en ajustant progressivement dans la composition les oxydes de magnésium et d'aluminium. Le produit fondu est alors dispersé en billes par soufflage d'air comprimé et isolé par coulée.

Cette technique permet de disposer de plusieurs lots de billes de compositions différentes que l'on peut caractériser selon des méthodes bien connues de l'homme de l'art.

Les billes les plus sollicitées à la casse en application étant les billes de taille supérieure à 1,6 mm, les tests décrits précédemment ont été effectués sur la tranche granulométrique 1,6 à 2,5 mm.

Les résultats obtenus sont résumés dans le tableau 1 suivant.

**Tableau 1**

| Ex. | ZrO₂+ HfO₂ en % | SiO₂ en % | MgO en % | Al₂O₃ en % | MgO/ Al₂O₃ | Autres oxydes en % | mᵢ en gr | m_{bc} en gr | % de billes cassées | Amélioration de la casse par rapport à la référence en% | Usure en %/h |
|---|---|---|---|---|---|---|---|---|---|---|---|
| Réf. (*) | 67,9 | 30 | 0,01 | 1,86 | 0,01 | 0,23 | 1367,6 | 10,83 | 0,79 | - | 2,94 |
| 1 | 60,6 | 26,3 | 9,12 | 3,65 | 2,5 | 0,33 | 1352,6 | 11,9 | 0,88 | 11,39 | n.d. |
| 2 | 60,8 | 27 | 8,72 | 3,11 | 2,80 | 0,37 | 1355,3 | 9,08 | 0,67 | 15,19 | 1,80 |
| 3 | 61 | 28,2 | 7,93 | 2,42 | 3,28 | 0,45 | 1357,2 | 8,55 | 0,63 | 20,25 | 1,70 |
| 4 | 60,8 | 28,3 | 8,64 | 1,86 | 4,65 | 0,4 | 1348,7 | 3,53 | 0,26 | 67,09 | 1,60 |
| 5 | 61,2 | 28,5 | 8,58 | 1,44 | 5,96 | 0,28 | 1357,2 | 7,62 | 0,56 | 29,11 | n.d. |
| 6 | 61,7 | 28,2 | 8,41 | 1,29 | 6,52 | 0,4 | 1353,2 | 9,01 | 0,67 | 15,19 | 1,61 |
| 7 | 67,5 | 22,2 | 8,36 | 1,52 | 5,5 | 0,42 | 1351,7 | 6,35 | 0,47 | 40,5 | 1,80 |
| 8 (*) | 62,4 | 28,4 | 7,81 | 1,03 | 7,58 | 0,36 | 1345,7 | 14,6 | 1,08 | -36,7 | n.d. |

| | | | | | | | | | | | |
|---|---|---|---|---|---|---|---|---|---|---|---|
| n.d. : donnée non disponible (*) : Exemple hors invention. | | | | | | | | | | | |

Les billes de référence, hors invention, sont des billes couramment utilisées dans les applications de broyage.

On considère que les résultats sont particulièrement satisfaisants si les billes présentent:
- une amélioration de la résistance à la casse d'au moins 10 % par rapport à celle de la référence et
- au minimum la même résistance à l'usure que celle de la référence.

Les exemples montrent que, de façon surprenante, des valeurs du rapport MgO/Al₂O₃ comprises entre 2,4 et 6,6 confèrent une nette amélioration de la résistance à la casse ainsi qu'une amélioration sensible de la résistance à l'usure par rapport aux billes de référence. En dehors de cette plage (référence, billes 8), la résistance à la casse est nettement moins bonne que celle des billes selon l'invention.

La composition des billes de l'exemple 4 est la préférée d'entre toutes. Pour les billes de l'exemple 4, l'usure mesurée telle que décrite précédemment est de 1,60%/h alors qu'elle est de 2,94 %/h pour les billes de référence.

Bien entendu, la présente invention n'est pas limitée aux modes de réalisation décrits fournis à titre d'exemples illustratifs et non limitatifs.

## Revendications

1. Particule céramique fondue présentant la composition chimique suivante, en pourcentages en masse sur la base des oxydes et pour un total de 100 %:
55 % < ZrO₂+HfO₂ < 70 % ;
20 % < SiO₂ < 30 % ;
6,5 % < MgO < 9,5 % ;
Al₂O₃ en une quantité telle que le rapport en masse MgO / Al₂O₃ est compris entre 2,4 et 6,6 ; et
moins de 0,6 % d'autres oxydes.

2. Particule selon la revendication 1, dans laquelle la teneur en ZrO₂, en pourcentage en masse sur la base des oxydes, est supérieure ou égale à 60 % et/ou inférieure ou égale à 62%.

3. Particule selon l'une quelconque des revendications 1 et 2, dans laquelle la teneur en SiO₂, en pourcentage en masse sur la base des oxydes, est supérieure ou égale à 27 % et/ou inférieure ou égale à 29 %.

4. Particule selon l'une quelconque des revendications précédentes dans laquelle la teneur en MgO, en pourcentage en masse sur la base des oxydes, est supérieure ou égale à 8 % et/ou inférieure ou égale à 9 %.

5. Particule selon l'une quelconque des revendications précédentes dans laquelle le rapport en masse MgO / Al₂O₃ est supérieur ou égal à 4,2 et/ou inférieur ou égal à 5.

6. Particule selon l'une quelconque des revendications précédentes dans laquelle la teneur en « autres oxydes », en pourcentage en masse sur la base des oxydes, est inférieure ou égale à 0,5 %.

7. Particule selon l'une quelconque des revendications précédentes dans laquelle la teneur en oxydes représente plus de 99,5% de la masse totale de ladite particule.

8. Particule selon l'une quelconque des revendications précédentes présentant la composition chimique suivante, en pourcentages en masse sur la base des oxydes et pour un total de 100 % :
60 % < ZrO₂+HfO₂ < 62 %;
27%<SiO₂<29%;
8 % < MgO < 9 % ;
Al₂O₃ en une quantité telle que le rapport en masse MgO / Al₂O₃ est compris entre 4,2 et 5 ; et
moins de 0,5 % d'autres oxydes.

9. Particule selon l'une quelconque des revendications précédentes présentant une sphéricité supérieure ou égale à 0,6.

10. Utilisation d'une pluralité de particules selon l'une quelconque des revendications 1 à 9 en tant qu'agents de broyage, agents de dispersion en milieu humide, ou pour le traitement de surfaces.

## Claims

1. Fused ceramic particle having the following chemical composition, as weight percentages based on the oxides, and for a total of 100% :
55% < ZrO₂ + HfO₂ < 70%;
20% < SiO₂ < 30%;
6.5%<MgO<9.5%;
Al₂O₃ in an amount such that the MgO/Al₂O₃ weight ratio is between 2.4 and 6.6; and
less than 0.6% of other oxides.

2. Particle according to claim 1, in which the ZrO₂ content, as a weight percentage based on the oxides, is greater than or equal to 60% and/or less than or equal to 62%.

3. Particle according to any one of the preceding claims, in which the SiO₂ content, as a weight percentage based on the oxides, is greater than or equal to 27% and/or less than or equal to 29%.

4. Particle according to any one of the preceding claims, in which the MgO content, as a weight percentage based on the oxides, is greater than or equal to 8% and/or less than or equal to 9%.

5. Particle according to any one of the preceding claims, in which the MgO/Al₂O₃ weight ratio is greater than or equal to 4.2 and/or less than or equal to 5.

6. Particle according to any one of the preceding claims, in which the content of "other oxides", as a weight percentage based on the oxides, is less than or equal to 0.5%.

7. Particle according to any one of the preceding claims, in which the content of oxides represents more than 99.5% of the total weight of said particle.

8. Particle according to any one of the preceding claims, having the following chemical composition, as weight percentages based on the oxides, and for a total of 100%:
60% < ZrO₂ + HfO₂ < 62%;
27% < SiO₂ < 29%;
8% < MgO < 9%;
Al₂O₃ in an amount such that the MgO/Al₂O₃ weight ratio is between 4.2 and 5; and
less than 0.5% of other oxides.

9. Particle according to any one of the preceding claims, having a sphericity greater than or equal to 0.6.

10. Use of a plurality of particles according to any one of the claims 1 to 9, as grinding agents, agents for dispersion in a wet medium, or for surface treatment.

## Patentansprüche

1. Geschmolzene Partikel aus Keramik, welche die folgende chemische Zusammensetzung in Gewichtsprozent, bezogen auf die Oxyde und für einen Gesamtwert von 100%, aufweist:
55% < ZrO₂ + HfO₂ < 70%,
20% < SiO₂ < 30%,
6,5% < MgO < 9,5%,
Al₂O₃ in einer solchen Menge, dass das Massenverhältnis MgO / Al₂O₃ zwischen 2,4 und 6,6 liegt, und
weniger als 0,6% andere Oxyde.

2. Partikel nach Anspruch 1, deren Gehalt an ZrO₂, in Gewichtsprozent bezogen auf die Oxyde, größer oder gleich 60% und/oder kleiner oder gleich 62% ist.

3. Partikel nach einem beliebigen der Ansprüche 1 und 2, deren Gehalt an SiO₂, in Gewichtsprozent bezogen auf die Oxyde, größer oder gleich 27% und/oder kleiner oder gleich 29% ist.

4. Partikel nach einem beliebigen der vorherigen Ansprüche, deren Gehalt an MgO, in Gewichtsprozent bezogen auf die Oxyde, größer oder gleich 8% und/oder kleiner oder gleich 9% ist.

5. Partikel nach einem beliebigen der vorherigen Ansprüche, bei welcher das Massenverhältnis MgO / Al₂O₃ größer oder gleich 4,2 und/oder kleiner oder gleich 5 ist.

6. Partikel nach einem beliebigen der vorherigen Ansprüche, deren Gehalt an "anderen Oxyden", in Gewichtsprozent bezogen auf die Oxyde, kleiner oder gleich 0,5% ist.

7. Partikel nach einem beliebigen der vorherigen Ansprüche, deren Gehalt an Oxyden mehr als 99,5% der gesamten Masse des besagten Partikels darstellt.

8. Partikel nach einem beliebigen der vorherigen Ansprüche, welche die folgende chemische Zusammensetzung, in Gewichtsprozent bezogen auf die Oxyde und für einen Gesamtwert von 100%, aufweist: 60% < ZrO₂ + HfO₂ < 62%,
27% < SiO₂ < 29%,
8% < MgO < 9%,
Al₂O₃ in einer solchen Menge, dass das Massenverhältnis MgO / Al₂O₃ zwischen 4,2 und 5 liegt, und
weniger als 0,5% andere Oxyde.

9. Partikel nach einem beliebigen der vorherigen Ansprüche, welche eine Sphärizität größer oder gleich 0,6 aufweist.

10. Verwendung einer Vielzahl von Partikeln gemäß einem beliebigen der Ansprüche 1 bis 9 als Zerkleinerungsmittel, als Dispersionsmittel in einem feuchten Medium oder zur Oberflächenbearbeitung.
